Europäisches Patentamt

European Patent Office

Office européen des brevets

(11) Veröffentlichungsnummer: **0 217 145 B1**

(12) **EUROPÄISCHE PATENTSCHRIFT**

(45) Veröffentlichungstag der Patentschrift: 24.07.91

(51) Int. Cl.⁵: **C08G 69/34**, C09J 177/08

(21) Anmeldenummer: 86111969.1

(22) Anmeldetag: 29.08.86

(54) **Polyamidharze.**

(30) Priorität: 07.09.85 DE 3531941

(43) Veröffentlichungstag der Anmeldung:
08.04.87 Patentblatt 87/15

(45) Bekanntmachung des Hinweises auf die
Patenterteilung:
24.07.91 Patentblatt 91/30

(84) Benannte Vertragsstaaten:
AT BE CH DE FR GB IT LI LU NL SE

(56) Entgegenhaltungen:
DE-A- 1 594 008        DE-A- 1 720 408
DE-C- 1 107 402        FR-A- 2 303 039
GB-A- 1 227 858        GB-A- 1 400 611
US-A- 2 388 035

(73) Patentinhaber: Henkel Kommanditgesellschaft
auf Aktien
Postfach 1100 Henkelstrasse 67
W-4000 Düsseldorf-Holthausen(DE)AT BE CH
DE FR GB IT LI LU NL SE

Patentinhaber: Chem Plast SpA
Piazza Vetra 21
I-20123 Milano(IT)IT

(72) Erfinder: Leoni, Roberto, Dr.
Via Simone d'Orsenigo 22
I-20135 Milano(IT)
Erfinder: Gruber, Werner, Dr.
Franz-Kremer-Strasse 7
W-4052 Korschenbroich 1(DE)
Erfinder: Rossini, Angela, Dr.
Via Suzzani 155
I-20162 Milano(IT)

**Beschreibung**

Die Erfindung betrifft neue Polyamidharze, die zur Verwendung als Schmelzklebstoffe geeignet sind. Die neuen Polyamidharze enthalten neben dimerisierten Fettsäuren auf der Säureseite als charakteristischen Rohstoff zur Diamidbildung befähigte, wenigstens einseitig N-Alkyl-substituierte aliphatische Diamine.

Auf zahlreichen Gebieten der Klebetechnik gewinnen Schmelzkleber zunehmend an Bedeutung. Die Vorteile dieser Klebstoffe sind darin zu sehen, daß sie durch Abkühlen aus der Schmelze die erforderliche Bindungsfestigkeit erreichen und daher für schnell laufende Produktionsvorgänge geeignet sind. Weitere Vorteile sind darin zu sehen, daß Vorrichtungen zum Schutz gegen Lösungsmitteldämpfe entfallen und die oftmals langen Trocknungszeiten wäßriger Klebstoffe hier nicht auftreten.

Eine wichtige Klasse von Schmelzklebstoffen sind die Polyamide. Unter diesen haben Polyamide auf Basis dimerisierter Fettsäuren besondere Bedeutung gewonnen. Unter den Polyamiden auf Basis dimerisierter Fettsäuren wiederum kommt Polyamiden, die im Säureanteil dimerisierte Fettsäuren enthalten und im Aminanteil Etherdiamine, aufgrund ihrer guten Tieftemperatureigenschaften besondere Bedeutung zu.

So werden beispielsweise in der DE-A 27 54 233 Copolyamidharze beschrieben, die auf der Säureseite eine spezielle Mischung aus polymeren Fettsäuren (Dimerfettsäure) und aliphatischen Dicarbonsäuren mit 6 bis 12 C-Atomen enthalten und auf der Basenseite eine Mischung aus gesättigten aliphatischen Diaminen und Polyoxyalkylendiaminen. Die Produkte zeigen eine Sprödigkeitstemperatur von minus 25 °C.

Ähnliche Harze sind im US-Patent 4 218 351 beschrieben. Dieses betrifft Polyamide, die neben üblichen Rohstoffen 5 bis 30 Mol% Dimerfettsäure und 0,25 bis 12,5 Mol% amorphe Oligomere (Polyoxyalkylendiamine) enthalten.

Wenngleich die genannten polyetherdiaminhaltigen Polyamide für zahlreiche Anwendungen hinreichende Eigenschaften aufweisen, so bestand doch der Wunsch, unter Beibehaltung oder Verbesserung des Tieftemperaturverhaltens die Substrathaftung zu verbessern. Weiterhin bestand der Wunsch nach Produkten mit geringerem Wasseraufnahmevermögen.

Aufgabe der Erfindung ist es somit, in dieser Hinsicht verbesserte Polyamide bereitzustellen, die als Schmelzkleber eingesetzt werden können.

Gegenstand der Erfindung sind daher thermoplastische Polyamidharze mit verbesserter Substrathaftung, bestehend im wesentlichen aus Polykondensationsprodukten der folgenden Komponenten

a) 25 - 50 Mol%    Dimerfettsäuren

b) 0 - 25 Mol%    aliphatische Dicarbonsäuren mit 6 - 22 C-Atomen

c) 25 - 45 Mol%    aliphatische, aromatische und/oder cyclische Diamine mit 2 - 40 C-Atomen aus der Klasse der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine.

d) 5 - 25 Mol%    wenigstens 1-seitig N-Alkyl-substituierte zur zweifachen Amidbildung befähigte aliphatische Diamine mit 2 - 10 C-Atomen und 10 - 25 C-Atomen im geradkettig oder verzweigten N-Alkylrest.

Ein weiterer Gegenstand der Erfindung ist die Verwendung der neuen Polyamidharze als Schmelzkleber.

Die Polyamidharze gemäß der Erfindung setzen sich daher aus einer - vorzugsweise gemischten - Säurekomponente und einer gemischten Aminkomponente zusammen.

Wichtigster Bestandteil der Säurekomponente sind Dimerfettsäuren. Unter Dimerfettsäuren werden hier Produkte verstanden, die als Hauptbestandteil das Dimerisationsprodukt einer oder mehrerer ungesättigter Fettsäuren enthalten. Dimerfettsäuren sind dem auf dem Polyamidgebiet tätigen Fachmann bekannt. Es handelt sich um technische Produkte, die als Gemische vorliegen. Übliche Dimerfettsäuren enthalten einen Anteil von Trimerfettsäuren und einen Anteil von monofunktionellen Fettsäuren. Für die Zwecke der Erfindung sind Dimerfettsäuren geeignet, deren Anteil an Trimerfettsäure unter 10 und insbesondere unter 5 Mol% liegt. Dabei ist es dem Fachmann bekannt, daß ein zu hoher Anteil an Trimerfettsäure, der zur Vergelung des Polyamids führen kann, durch die Zugabe von Kettenabbrechern, das sind insbesondere monofunktionelle Fettsäuren oder monofunktionelle Amine, zum Teil ausgeglichen werden kann. Es gilt hier das allgemeine Fachwissen der Polymerchemie.

Besonders geeignet sind Dimerfettsäuren, die durch Dimerisierung von C-18-Fettsäuren gewonnen worden sind und 36 Kohlenstoffe enthalten. Darüber hinaus können auch kürzerkettige oder längerkettige Dimerfettsäuren eingesetzt werden, soweit verfügbar.

Als weitere Säurekomponente können die erfindungsgemäßen Polyamidharze aliphatische Dicarbonsäuren mit 6 bis 22 C-Atomen enthalten. Bevorzugt sind hier gesättigte Dicarbonsäuren mit 6 bis 12 C-Atomen, insbesondere lineare Dicarbonsäuren mit endständigen Carboxylgruppen. So sind insbesondere Adipinsäu-

EP 0 217 145 B1

re, Heptandicarbonsäure, Octandicarbonsäure, Azelainsäure, Nonandicarbonsäure, Sebacinsäure, Undecandicarbonsäure, Dodecandicarbonsäure und/oder Brassylsäure sowie deren höhere Homologen geeignet. Zur Auswahl der Art und Menge der Dicarbonsäuren gilt das folgende:

Werden Polyamidharze mit niederem Schmelzpunkt gewünscht, so wird der Fachmann keine aliphatischen Dicarbonsäuren mit 6 bis 22 C-Atomen oder nur geringe Mengen derartiger Säuren einsetzen. Werden hohe Schmelzpunkte gefordert, so werden im Rahmen der vorgegebenen Molmenge größere Anteile an derartigen Dicarbonsäuren eingesetzt, und zwar insbesondere die kürzerkettigen, etwa Adipinsäure.

Als Aminkomponente erhalten die erfindungsgemäßen Polyamidharze 25 bis 45 Mol% aliphatische, aromatische und/oder cyclische Diamine mit 2 bis 40 C-Atomen aus der Klasse der di-primären Diamine, der sekundären Aminogruppen enthaltenden Diamine mit Alkylsubstituenten mit nicht mehr als 8 C-Atomen am N-Atom und/oder der zur zweifachen Amidbildung befähigten heterocyclischen Diamine. Bevorzugt sind Diamine mit 2 bis 20 C-Atomen, insbesondere niedere gerad- oder verzweigtkettige aliphatische oder monocyclische diprimäre Diamine bzw. monocyclische, heterocyclische Diamine. Die hier in Frage kommenden Diamine lassen sich in verschiedene Gruppen aufteilen. Von großer Bedeutung sind beispielsweise die di-primären aliphatischen Diamine mit endständigen Aminogruppen. Unter diesen sind Amine bevorzugt, die in ihrem Kohlenstoffgerüst den vorgenannten Dicarbonsäuren einschließlich Dimerfettsäuren entsprechen, sowie die kürzerkettigen Homologen derartiger Diamine. Wichtige Diamine im einzelnen sind daher Ethylendiamin, Propylendiamin, Hexamethylendiamin und deren Homologe sowie Dimerfettdiamin (herstellbar durch Umwandlung von Dimerfettsäuren in die Dinitrile und anschließende Hydrierung der beiden Nitrilgruppen). Eine weitere Gruppe von Diaminen sind aromatische Diamine. Eingesetzt werden können aromatische Diamine, die sich von Benzol-, Toluol- oder anders substiuierten Aromaten ableiten, zum Beispiel 2,6-Toluylendiamin, 4,4'-Diphenylmethandiamin und/oder Xylylendiamin. Weiter eingesetzt werden können die analogen Cyclohexanderivate.

Eine weitere Klasse von Diaminen, die in den erfindungsgemäßen Polyamidharzen eingesetzt werden können, sind die Diamine, die eine oder zwei sekundäre Aminogruppen enthalten, die einen Alkylsubstituenten mit nicht mehr als 8 C-Atomen am N-Atom aufweisen. Derartige Diamine leiten sich von den zuvor benannten di-primären aliphatischen Diaminen ab und weisen am N-Atom einen kurzkettigen Alkylsubstituenten auf, insbesondere Methyl, Ethyl oder Propyl.

Eine weitere Gruppe von Diaminen, die in den erfindungsgemäßen Polyamidharzen eingesetzt werden können, sind die zur zweifachen Amidbildung befähigten heterocyclischen Diamine. Dabei handelt es sich vorzugsweise um aliphatische Heterocyclen. Wichtigster Vertreter dieser Gruppe ist das Piperazin.

Als wichtigsten Bestandteil erhalten die erfindungsgemäßen Polyamidharze 5 bis 25 Mol% wenigstens einseitig N-alkylsubstituierte, zur zweifachen Amidbildung befähigte aliphatische Diamine mit 2 bis 10 C-Atomen und 10 bis 25 C-Atomen im geradkettigen oder verzweigten N-Alkylrest. Der Grundkörper dieser Amine kann sich von den zuvor genannten aliphatischen di-primären Diaminen ableiten. Dabei ist der Grundkörper vorzugsweise unverzweigt, das heißt, es handelt sich insbesondere um Ethylendiamin, Propylendiamin, Tetramethylendiamin, Pentamethylendiamin, Hexamethylendiamin oder deren höhere Homologe, die an mindestens einem der N-Atome einen Alkylrest mit 10 bis 25 C-Atomen aufweisen.

Der an mindestens einem der N-Atome befindliche Alkylrest enthält 10 bis 25 C-Atome, er kann linear, verzweigt oder cyclisch sein, wobei jedoch geradkettige Reste bevorzugt sind. Unter den geradkettigen Resten wiederum sind solche mit einer geraden Anzahl an C-Atomen bevorzugt. Die zur zweifachen Amidbildung befähigten, wenigstens einseitig N-alkylsubstituierten aliphatischen Diamine können als definierte Substanz eingesetzt werden. Es ist jedoch bevorzugt, hier Mischungen einzusetzen. So sind Produkte bevorzugt, deren N-Alkylrest Kettenlänge und Kettenlängenverteilung einer hydrierten Fettsäuremischung aufweist. Besonders bevorzugte N-alkylsubstituierte aliphatische Diamine weisen N-Alkylsubstituenten auf, deren Kettenlänge der einer hydrierten Talgfettsäure oder einer hydrierten Tallölfettsäure entspricht.

Die erfindungsgemäßen Polyamidharze können Säurekomponenten und Aminkomponenten in stöchiometrischen Mengen enthalten. Für den Einsatz als Schmelzkleber wird es jedoch in der überwiegenden Anzahl der Fälle gewünscht, daß restliche Aminogruppen oder restliche Säuregruppen vorhanden sind. Um dies zu erreichen, wird der Fachmann einen Säure- oder Basenüberschuß einsetzen, der jedoch nicht mehr als 10 Äquivalentprozent aller funktionellen Gruppen ausmacht. Basenterminierte Harze weisen Aminzahlen bis etwa 50, vorzugsweise von 2 bis 20 und insbesondere von 2 bis 15 auf. Säureterminierte Harze sollten eine Säurezahl im Bereich bis etwa 20, vorzugsweise von 2 bis 10 besitzen.

Die erfindungsgemäßen Polyamidharze weisen ein Molekulargewicht (Zahlenmittel) im Bereich von 5.000 bis 15.000, vorzugsweise von 8.000 bis 12.000 auf. Dabei wird der Fachmann zur Erzielung hoher Molekulargewichte Säure- und Basenkomponente in möglichst äquivalenten Mengen einsetzen, wohingegen zur Erreichung niederer Molekulargewichte mit Überschüssen einer Komponente gearbeitet werden kann.

3

EP 0 217 145 B1

Eine weitere Möglichkeit zur Erniedrigung des Molekulargewichts ist die Zugabe von Kettenabbrechern wie monofunktionellen Fettsäuren oder monofunktionellen Aminen. Andererseits kann das Molekulargewicht durch einen gewissen Anteil an trifunktionellen Komponenten, etwa Trimerfettsäure, gesteigert werden.

Die erfindungsgemäßen Polyamidharze unterscheiden sich somit von Produkten mit geringerem Molekulargewicht, welche flüssige bis wachsartig feste Konsistenz aufweisen. Sie zeigen eine Reißfestigkeit von 20 bis 45 kg/cm$^2$, insbesondere 30 bis 40 kg/cm$^2$ und eine Reißdehnung von 600 bis 950 %, insbesondere von 700 bis 900 %.

Die erfindungsgemäßen Polyamidharze besitzen einen Erweichungspunkt (bestimmt nach ASTME-28) im Bereich von 60 bis 200 °C, vorzugsweise von 80 bis 150 °C. Dennoch sind die Tieftemperatureigenschaften der Verbindungen ausgezeichnet. Die Bedingungen des Mandrell-Tests (Wicklung eines Prüfkörpers der Dimension 20 mm × 170 mm und einer Dicke von 1 mm um einen Messingzylinder mit einem Durchmesser von 25,6 mm um 360 °) werden bei minus 30 °C, vorzugsweise bei minus 40 °C erfüllt. Ein besonderer Vorteil der Produkte liegt in ihrer verbesserten Substrathaftung. So werden im Vergleich zum Stand der Technik günstigere Substrathaftungen bei schwer zu verklebenden Materialien wie PVC, Polyesterfolien oder auch auf Aluminium festgestellt. Darüber hinaus ist die Wasseraufnahme der Produkte wesentlich geringer als dies bei Polyamidharzen auf Basis von Polyetherdiaminen der Fall ist.

Beispiele

Die Kondensation wurde in einem tubulierten Glaskolben unter Stickstoffatmosphäre und Rühren vorgenommen. Die vorgelegten Carbonsäuren wurden zunächst auf etwa 60 °C erhitzt und dann die weiteren Reaktionskomponenten zugegeben. Innerhalb einer Stunde wurde dann auf 230 °C aufgeheizt und eine Stunde bei dieser Temperatur gehalten. Dann wurde während der nächsten Stunde bei konstanter Temperatur auf 15 mbar evakuiert. Nach Abkühlen auf 120 °C wurde das Reaktionsprodukt abgelassen und zur Bestimmung der Eigenschaften isoliert.

In der folgenden Tabelle sind in Abhängigkeit von der laufenden Nummer des Beispiels die eingesetzten Mengen in g angegeben sowie Amin- und Säurezahl des Reaktionsprodukts. Auch sind der Erweichungspunkt (R + B, ASTM E-28) sowie die für die bei tiefen Temperaturen gefundenen Werte für die Flexibilität in °C aufgeführt. Diese wurde durch den Mandrell-Test bestimmt, indem ein Prüfkörper der Dimension 20 mm × 170 mm und einer Dicke von 1 mm um einen Messingzylinder mit einem Durchmesser von 25,6 mm um 360 ° gewickelt wurde. Die Prüfungen erfolgten bei abnehmenden Temperaturen (Prüfkörper und Zylinder im Temperaturgleichgewicht), um die niedrigste Temperatur festzustellen, bei der drei von fünf Prüfkörpern den Wickeltest ohne Bruch überstanden.

| Beispiel | Nr. 1 g | Nr. 2 g | Nr. 3 g |
|---|---|---|---|
| Dimerfettsäure | 285 | 236 | 236 |
| Azelainsäure | – | 16 | 16 |
| Ethylendiamin | 24 | 24 | 18 |
| N-Alkyl-propylen-diamin | 33,4 | 33,4 | 75,2 |
| Erweichungspunkt | 100 °C | 140 °C | 120 °C |
| Aminzahl | 4,1 | 3,2 | 6,0 |
| Flexibilität | -35 °C | -40 °C | -45 °C |

4

Erläuterung:

Das eingesetzte N-Alkyl-propylendiamin weist einen Alkylrest R auf, der in Kettenlänge und Kettenlängenverteilung der Tallölfettsäure entspricht.

R-NH-(CH₂)₃-NH₂

Vergleichsbeispiele

| Beispiel | A | B |
|---|---|---|
| | mol% | mol% |
| Dimerfettsäure | 50 | 41 |
| Azelainsäure | – | 9 |
| Ethylendiamin | 50 | 50 |
| Erweichungspunkt | 110 °C | 165 °C |
| Aminzahl | 2,0 | 3,1 |
| Flexibilität | 0 °C | –10 °C |

Zur Bestimmung der Klebeeigenschaften wurden Zugscherfestigkeiten nach DIN 52283 bestimmt.

Verklebt wurden: Aluminium gegen Aluminium (Al/Al)
PVC gegen PVC (Hart-PVC)
sowie eine schwer zu verklebende
Polyesterfolie (Mylar)
Die ermittelten Werte in N pro mm² sind in der nachfolgenden Tabelle aufgelistet.

## Tabelle

### Klebeeigenschaften der neuen Polyamidharze

in $N/mm^2$ nach DIN 52283

| Substrat | Beispiel 1 | Beispiel 1 | Beispiel 3 | Vergl. Beispiel A | Vergl. Beispiel B |
|---|---|---|---|---|---|
| Al/Al | 7,6 | 10,8 | 9,8 | 4,5 | 5,4 |
| PVC/PVC | 8,5 | 7,0 | 9,1 | 1,9 | 2,3 |
| Mylar/ Mylar | 2,5 | 3,0 | 2,7 | 0,4 | 0,8 |

**Patentansprüche**

1. Thermoplastische Polyamidharze mit verbesserter Substrathaftung, bestehend im wesentlichen aus Polykondensationsprodukten der folgenden Komponenten
   a) 25 - 50 Mol%   Dimerfettsäuren
   b) 0 - 25 Mol%   aliphatische Dicarbonsäuren mit 6 - 22 C-Atomen
   c) 25 - 45 Mol%   aliphatische, aromatische und/oder cyclische Diamine mit 2 - 40 C-Atomen aus der Klasse der di-primären Diamine, der sekundäre Aminogruppen enthaltenden Diamine mit Alkylsubstituenten mit nicht mehr als 8 C-Atomen am N-Atom und/oder der zur zweifachen Amidbildung befähigten heterocyclischen Diamine.
   d) 5 - 25 Mol%   wenigstens 1-seitig N-Alkyl-substituierte, zur zweifachen Amidbildung befähigte aliphatische Diamine mit 2 - 10 C-Atomen und 10 - 25 C-Atomen im geradkettig oder verzweigten N-Alkylrest.

2. Polyamidharze nach Anspruch 1, dadurch gekennzeichnet, daß ihr Säure- bzw. Basenüberschuß nicht mehr als 10 Äquivalent-% aller funktionellen Gruppen ausmacht, wobei vorzugsweise Basen-terminierte Harze Aminzahlen im Bereich bis 50, vorzugsweise von 2 - 20 und insbesondere von 2 - 15 aufweisen, während Säure-terminierte Harze Säurezahlen im Bereich bis 20, vorzugsweise von 2 - 10 besitzen.

3. Polyamidharze nach Ansprüchen 1 und 2, dadurch gekennzeichnet, daß sie ein Molekulargewicht im Bereich von 5.000 -15.000, vorzugsweise von 8.000 - 12.000 besitzen.

4. Polyamidharze nach Ansprüchen 1 bis 3, dadurch gekennzeichnet, daß sie die Bedingungen des Mondrelltestes (Wicklung bei vorgegebener Temperatur um einen Metallzylinder unter Standardbedingungen) bei -30 ° C, vorzugsweise bei -40 ° C erfüllen.

5. Polyamidharze nach Ansprüchen 1 bis 4, dadurch gekennzeichnet, daß sie einen Erweichungspunkt (ASTM E-28) im Bereich von 60 - 200 °C, vorzugsweise von 80 - 150 °C besitzen.

6. Polyamidharze nach Ansprüchen 1 bis 5, dadurch gekennzeichnet, daß sie als Komponente a) technische Dimerfettsäuren mit einem Gehalt an Trimerfettsäuren nicht über 10 Mol%, vorzugsweise nicht über 5 Mol% - gewünschtenfalls neben beschränkten Mengen an Monocarbonsäuren - enthalten.

7. Polyamidharze nach Ansprüchen 1 bis 6, dadurch gekennzeichnet, daß sie als Komponente b) gesättigte aliphatische Dicarbonsäuren mit vorzugsweise 6 - 12 C-Atomen enthalten.

8. Polyamidharze nach Ansprüchen 1 bis 7, dadurch gekennzeichnet, daß sie als Komponente c) Diamine mit 2 - 20 C-Atomen enthalten, die insbeondere niedere gerad- oder verzweigtkettige aliphatische oder monocyclische diprimäre Diamine, bzw. monocyclische heterocyclische Diamine sind.

## Claims

1. Thermoplastic polyamide resins with improved substrate adhesion consisting essentially of polycondensates of the following components:
   a) 25 to 50 mol-%      dimer fatty acids,
   b) 0 to 25 mol-%      aliphatic $C_{6-22}$ dicarboxylic acids,
   c) 25 to 45 mol-%      aliphatic aromatic and/or cyclic $C_{2-40}$ diamines from the group comprising diprimary diamines, diamines containing secondary amino groups and alkyl substituents with no more than 8 C-atoms on the N-atom and/or heterocyclic diamines capable of diamide formation,
   d) 5 to 25 mol-%      aliphatic diamines capable of diamide formation and N-alkyl-substituted on at least one side, containing from 2 to 10 C-atoms and from 10 to 25 C-atoms in the straight-chain or branched N-alkyl group.

2. Polyamide resins as claimed in claim 1, characterized in that their acid or base excess makes up no more than 10 equivalent percent of all functional groups, base-terminated resins, having amine values of up to 50, preferably from 2 to 20 and more preferably from 2 to 15 while acid-terminated resins have acid values of up to 20 and preferably of from 2 to 10.

3. Polyamide resins as claimed in claims 1 and 2, characterized in that they have a molecular weight of from 5,000 to 15,000 and preferably of from 8,000 to 12,000.

4. Polyamide resins as claimed in claims 1 to 3, characterized in that they satisfy the requirements of the mandrel test (winding at a predetermined temperature about a metal cylinder under standard conditions) at -30 °C and preferably at -40 °C.

5. Polyamide resins as claimed in claims 1 to 4, characterized in that they have a softening point (ASTM E-28) in the range from 60 to 200 °C and preferably in the range from 80 to 150 °C.

6. Polyamide resins as claimed in claims 1 to 5, characterized in that they contain as component a) technical dimer fatty acids incorporating no more than 10 and preferably no more than 5 mol-% trimer fatty acids, if desired in addition to limited quantities of monocarboxylic acids.

7. Polyamide resins as claimed in claims 1 to 6, characterized in that they contain as component b) saturated aliphatic dicarboxylic acids preferably containing from 6 to 12 C-atoms.

8. Polyamide resins as claimed in claims 1 to 7, characterized in that they contain as component c) $C_{2-20}$ diamines which are in particular lower straight- or branched-chain aliphatic or monocyclic diprimary diamines or monocyclic heterocyclic diamines.

## Revendications

1. Résines de polyamides thermoplastiques avec adhérence améliorée aux substrats, constituées essentiellement de produits de polycondensation des constituants suivants :
   a) 25 à 50 moles %      d'acides gras dimérisés,

b) 0 à 25 moles %   d'acides dicarboxyliques aliphatiques à 6 à 22 atomes de carbone,

c) 25 à 45 moles %   de diamines aliphatiques aromatiques et/ou cycliques avec 2à 40 atomes de carbone et choisies dans la classe des diamines di-primaires, des diamines contenant des groupes amino secondaires avec des substituants alkylés ne contenant pas plus de 8 atomes de carbone sur l'atome d'azote et/ou des diamines hétérocyclique convenant pour la formation d'amides doubles;

d) 5 à 25 moles %   de diamines aliphatiques N-alkyl-substituées d'un côté au moins et convenant pour la formation d'amides doubles avec 2 à 10 atomes de carbone et 10 à 25 atomes de carbone dans le radical N-alkyle à chaîne linéaire ou ramifiée.

2. Résines de polyamides selon la revendication 1, caractérisées en ce que leur excès d'acide ou de base ne représente pas plus de 10 équivalents % de tous les groupes fonctionnels, tandis que les résines terminées par des bases présentent de préférence des indices d'amine compris dans la gamme allant jusqu'à 50 et, de préférence, de 2 à 20 et plus particulièrement de 2 à 15, tandis que les résines terminées par des acides présentent des indices a'acide dans la gamme allant jusqu'à 20 et, de préférence, de 2 à 10.

3. Résines de polyamides selon les revendications 1 et 2, caractérisées en ce qu'elles présentent un poids moléculaire compris dans la gamme de 5.000 à 15.000 et de préférence de 8.000 à 12.000.

4. Résines de polyamides selon des revendications 1 à 3, caractérisées en ce quelles répondent aux conditions de l'essai au mandrin (enroulement à température donnée autour d'un cylindre de métal dans des conditions standard) à -30° C et de préférence à -40° C.

5. Résines de polyamides selon les revendications 1 à 4, caractérisées en ce qu'elles présentent un point de ramollissement (ASTM E-28) compris dans la gamme de 60 à 200° C et, de préférence, de 80 à 150° C.

6. Résines de polyamides selon les revendications 1 à 5, caractérisées en ce qu'elles contiennent comme constituants a) des acides gras dimérisés techniques ayant une teneur en acides gras trimérisés ne dépassant pas 10 moles % et ne dépassant pas de préférence 5 moles % avec, le cas échéant, des quantités limitées d'acides monocarboxyliques.

7. Résines de polyamides selon les revendications 1 à 6, caractérisées en ce qu'elles contiennent comme constituants b) des acides dicarboxyliques aliphatiques saturés avec, de préférence, de 6 à 12, atomes de carbone.

8. Résines de polyamides selon les revendications 1 à 7, caractérisées en ce qu'elles contiennent comme constituants c) des diamines à 2 à 20 atomes de carbone qui sont en particulier des diamines aliphatiques inférieures à chaîne linéaire ou ramifiée ou di-primaires monocycliques ou des diamines hétérocycliques monocycliques.